Europäisches Patentamt

European Patent Office

Office européen des brevets

(19)

(11) Numéro de publication: **0 258 074 B1**

## (12) FASCICULE DE BREVET EUROPEEN

(45) Date de publication de fascicule du brevet: **02.09.92**   (51) Int. Cl.5: **F02P 7/06**, G01P 3/488

(21) Numéro de dépôt: **87401388.1**

(22) Date de dépôt: **19.06.87**

Le dossier contient des informations techniques présentées postérieurement au dépôt de la demande et ne figurant pas dans le présent fascicule.

(54) **Capteur inductif pour l'émission d'un signal destiné à déclencher un dispositif d'allumage pour moteur à combustion interne, et dispositif d'allumage comportant un tel capteur inductif.**

(30) Priorité: **01.08.86 FR 8611180**

(43) Date de publication de la demande:
**02.03.88 Bulletin 88/09**

(45) Mention de la délivrance du brevet:
**02.09.92 Bulletin 92/36**

(84) Etats contractants désignés:
**DE ES GB IT**

(56) Documents cités:
EP-A- 0 190 879     DE-B- 2 544 158
FR-A- 2 204 070     FR-A- 2 257 796
FR-A- 2 473 724     US-A- 3 383 219
US-A- 3 960 248

(73) Titulaire: **VALEO ELECTRONIOUE**
**12-14, Rue Jean Bart**
**F-78390 Voisins-Le-Bretonneux(FR)**

(72) Inventeur: **Heritier Best, Pierre**
**Orbeil**
**F-63500 Issoire(FR)**

(74) Mandataire: **Bloch, Gérard et al**
**2, square de l'Avenue du Bois**
**F-75116 Paris(FR)**

EP 0 258 074 B1

## Description

L'invention est relative à un capteur inductif pour l'émission d'un signal destiné à déclencher un dispositif d'allumage pour moteur à combustion interne, capteur du genre de ceux qui comprennent un stator comportant des dents polaires réparties à sa périphérie et un rotor concentrique au stator comportant également des dents polaires propres à défiler en regard de celles du stator, lorsque le rotor est entraîné en rotation, le rotor et le stator appartenant à un circuit magnétique comprenant un aimant et ayant des lignes de flux magnétique qui passent par les dents polaires du stator et du rotor et par un entrefer situé entre ces dents, le capteur inductif comprenant en outre une bobine propre à être traversée par le flux magnétique du circuit, flux dont les variations provoquées par la rotation du rotor engendrent, par induction, des signaux aux bornes de la bobine, ledit capteur comportant en outre des moyens pour permettre à la réluctance d'entrefer de rester sensiblement constante en réponse à un déplacement axial du rotor relativement au stator.

FR-A-2 473 724 décrit un capteur inductif de mesure, du même genre, traduisant une vitesse angulaire en un signal électrique de fréquence proportionnelle à cette vitesse, ce capteur comportant des moyens permettant de s'affranchir des effets des vibrations axiales et de garder constante la réluctance d'entrefer malgré de telles vibrations axiales. Ces moyens consistent à avoir une longueur utile du stator au niveau de l'entrefer inférieure à celle du rotor.

Ce document antérieur ne met pas en lumière l'importance de l'entrefer circonférentiel qui est celui qui intervient principalement au moment du déclenchement de l'allumage.

Le document DE-B-25 44 158 décrit, pour un dispositif d'allumage, un capteur inductif dont la structure générale correspond à celle du capteur de l'invention, et qui permet d'obtenir une allure précise du signal de commande, mais ce dispositif ne permet pas de garder un entrefer circonférentiel de réluctance sensiblement constante vis-à-vis des vibrations axiales ou des jeux, pour la plage angulaire correspondant au déclenchement de l'allumage.

L'invention a pour but, surtout, de fournir un capteur inductif du genre défini précédemment qui soit bien adapté au déclenchement d'un dispositif d'allumage tout en permettant de réduire les parasites dans le signal fourni par ce capteur, parasites dus en particulier à des déplacements relatifs axiaux des dents polaires du stator et du rotor, afin d'obtenir un fonctionnement fiable. L'invention a également pour but de conserver au capteur inductif une structure simple et économique.

Selon l'invention, un capteur inductif du genre défini précédemment, est caractérisé par le fait que les moyens pour permettre à la réluctance d'entrefer de rester sensiblement constante en réponse à un déplacement axial relatif des dents (9,11) du stator et du rotor sont constitués par la forme des dents du rotor et la forme des dents du stator, ces formes étant choisies de telle sorte que la dimension de l'entrefer circonférentiel, dimension égale à la distance séparant circonférentiellement une dent du stator et la dent correspondante du rotor, augmente lorsque les sections de passage offertes au flux magnétique dans l'entrefer augmentent par suite d'un déplacement axial relatif des dents du stator et du rotor et, qu'inversement, cette dimension de l'entrefer diminue lorsque lesdites sections de passage diminuent par suite d'un tel déplacement axial, de sorte que la réluctance d'entrefer circonférentiel reste sensiblement constante en réponse au déplacement axial.

Généralement le stator présente un fond sensiblement plan comportant, à sa périphérie, des dents sensiblement orthogonales au plan moyen du fond, tandis que le rotor présente une forme semblable à celle du stator, mais avec sa concavité orientée en sens inverse, le rotor étant situé du même côté du fond du stator que les dents dudit stator, de sorte que les dents du rotor défilent au voisinage de celles du stator, en étant généralement situées radialement vers l'intérieur par rapport aux dents du stator. La forme des dents du rotor et du stator est alors choisie de telle sorte que ces dents présentent un bord d'attaque incliné d'un angle (a) pour le rotor et d'un angle (b) pour le stator par rapport à la direction de l'axe de rotation afin que la distance entre les bords d'attaque, définissant l'espace d'entrefer circonférentiel, considérée pour une position angulaire donnée du rotor, diminue lorsque la distance axiale entre le plan moyen du fond du rotor et le plan moyen du fond du stator augmente, et qu'inversement, la susdite distance entre les bords d'attaque augmente, lorsque la distance entre les plans moyens des fonds du rotor et du stator diminue.

De prérérence, les angles a et b sont égaux en valeur absolue. Cette valeur peut être choisie de telle sorte que, pour une position angulaire donnée du rotor par rapport au stator, le rapport de la longueur des bords d'attaque en regard, déterminant un espace d'entrefer sensiblement circonférentiel, à la distance entre ces bords d'attaque reste sensiblement constant si la distance axiale relative entre les dents considérées du stator et du rotor varie.

Avantageusement, le contour en élévation des dents du rotor et du stator a la forme d'un trapèze dont la petite base est attenante au fond du rotor ou du stator, et dont la grande base est éloignée du fond. Ce trapèze est de préférence un trapèze isocèle.

L'invention est également relative à un dispositif d'allumage pour moteur à combustion interne comportant un capteur inductif tel que défini précédemment.

L'invention consiste, mises à part les dispositions exposées ci-dessus, en un certain nombre d'autres dispositions dont il sera plus explicitement question ci-après, à propos d'un mode de réalisation particulier décrit avec référence aux dessins ci-annexés, mais qui n'est nullement limitatif.

La figure 1, de ces dessins, est une coupe schématique d'un capteur inductif conforme à l'invention.

La figure 2 est un diagramme représentant un signal de tension, porté en ordonnée, recueilli aux bornes d'un capteur inductif en fonction du temps porté en abscisse.

La figure 3 est une vue développée des dents polaires du rotor et du stator.

La figure 4, enfin, est une vue simplifiée en coupe des dents polaires suivant la ligne IV-IV, figure 1.

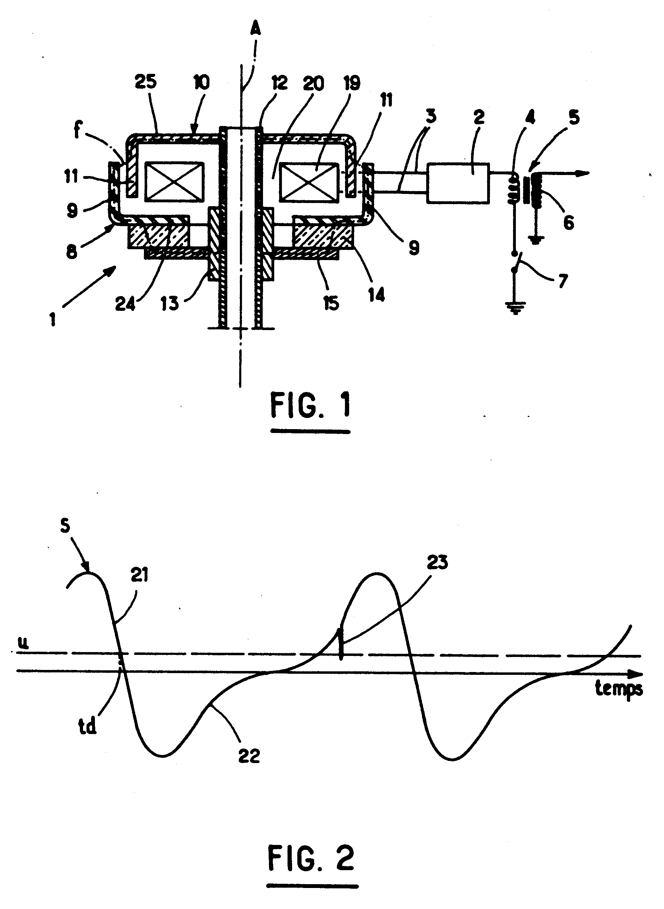

En se reportant à la figure 1 on peut voir un capteur inductif 1 pour l'émission d'un signal destiné à déclencher un dispositif d'allumage pour moteur à combustion interne. On a reorésenté schématiqumement sous forme d'un rectangle 2 un module électronique appartanant au dispositif d'allumage qui reçoit, sur son entrée, le signal provenant du capteur 1 et transmis par des conducteurs de liaison 3 . Ce module électronique 2 dont la sortie est branchée sur une borne de l'enroulement primaire 4 d'une bobine d'allumage 5 classique, est propre à ouvrir le circuit de cet enroulement primaire pour provoquer une surtension d'allumage aux bornes de l'enroulement secondaire 6 de la bobine 5. Un interrupteur classique 7, dont la fermeture est commandée par la clé de contact du véhicule, est monté dans le circuit de l'enroulement primaire 4, entre une borne de cet enroulement et la masse.

Le capteur 1 comprend un stator 8 comportant des dents polaires 9 réparties à sa périphérie et un rotor 10, également appelé distributeur de flux, concentrique au stator 8, et qui comporte également des dents polaires 11. Le nombre de dents du rotor peut être égal ou différent du nombre de dents du stator, ces nombres étant généralement des nombres pairs. Dans le cas d'un moteur à quatre cylindres, on utilise fréquemment un stator et un rotor comportant chacun quatre dents réparties de manière régulière sur la circonférence, c'est-à-dire que deux dents successives sont espacées angulairement de 90°.

Le rotor 10 est solidaire en rotation d'un arbre 12 entraîné à une vitesse égale ou proportionnelle à la vitesse de rotation du moteur, en fonction notamment du nombre de dents du rotor et du nombre de cylindres du moteur. Le rotor 10 et l'arbre 12 sont réalisés en une matière ayant une faible réluctance magnétique de manière à faciliter le passage d'un flux magnétique. Le stator 8 est maintenu fixe coaxialement à l'arbre 12 ; ce stator est solidaire d'un manchon 13, immobilisé en rotation et dans lequel est engagé avec un jeu réduit l'arbre 12. Le stator 8 ainsi que le manchon 13 sont réalisés en une matière conductrice du point de vue magnétique, par exemple en acier doux.

Un aimant 14 en forme de couronne circulaire, coaxial à l'arbre 12, est disposé contre une face du stator. Le pôle Nord de cet aimant est constitué par une face plane transversale d'extrémité dudit aimant, tandis que le pôle Sud est constitué par l'autre face plane d'extrémité de cet aimant. Les lignes du champ magnétique, au départ de ces faces, sont orthogonales auxdites faces et parallèles à l'axe de l'aimant 14 confondu avec l'axe géométrique A de l'arbre 12. L'aimant 14 est maintenu contre le stator 8 par une plaque fixe 15 liée de manière démontable au manchon 13.

Le stator 8 et le rotor 10 appartiennent ainsi à un circuit magnétique comprenant l'aimaint 14, circuit dont les lignes de flux magnétique schématiquement représentées par les lignes f passent par les dents polaires du stator et du rotor et par un entrefer situé entre ces dents.

Au sujet de cet entrefer, il convient de noter que lorsque le rotor tourne, les dents 11 de ce rotor défilent devant les dents 9 du stator. Lorsque les dents 9 et 11 ont sensiblement la même position angulaire, les surfaces en regard des dents 9 et 11, déterminant l'entrefer, sont des surfaces périphériques et l'entrefer est essentiellement un entrefer radial.

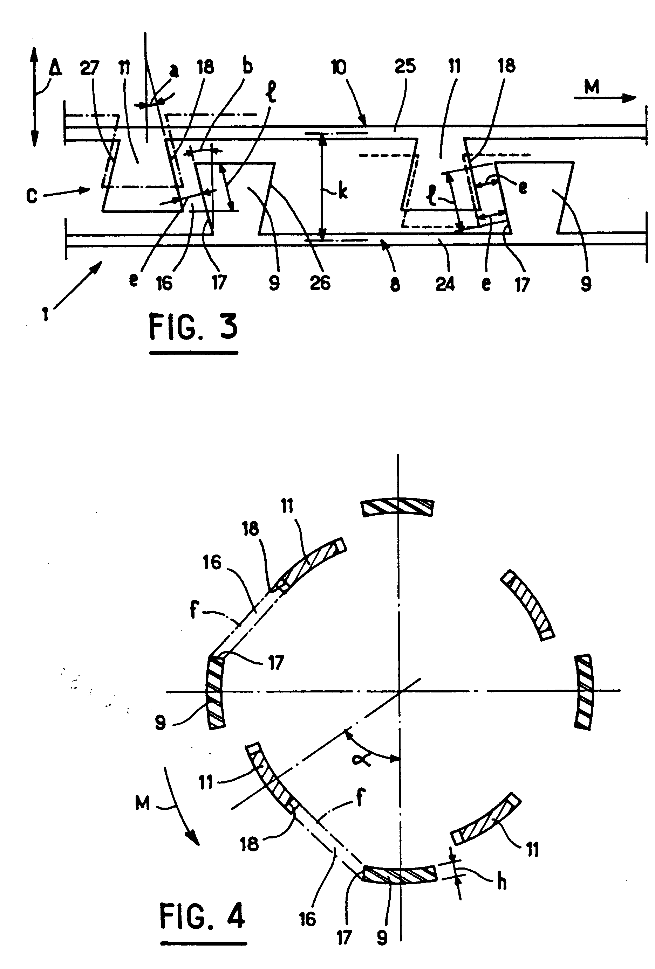

Par contre, comme représenté sur la figure 4, lorsque les dents 9 et 11 sont décalées angulairement, l'entrefer 16 qui sera celui considéré essentiellement dans la suite de la description, est un entrefer orienté sensiblement circonférentiellement et défini par les bords de chant tels que 17 et 18 des dents 9 et 11. Ces bords 17 et 18 seront également appelés dans la description bords d'attaque des dents du rotor et du stator.

Le capteur 1 comprend en outre une bobine 19 dont les spires circulaires sont coaxiales à l'axe A, le plan moyen d'une spire étant orthogonal à cet axe. Le flux magnétique traverse le volume intérieur 20 de cette bobine et les variations du flux provoquées par la rotation du rotor 10 engendrent, par induction. des signaux S (figure 2) aux bornes de la bobine 19, bornes qui sont reliées par les conducteurs 3 au module électronique 2.

La forme des signaux S apparaît sur la figure 2 où on a porté, en ordonnée, la tension aux bornes de la bobine 19, et en abscisse le temps.La forme du signal S alternatif comprend des branches descendantes 21 sensiblement rectilignes et des branches montantes 22 présentant un point d'inflexion pour la valeur nulle de la tension, ces branches 21 et 22 se raccordant par des arcs correspondant aux valeurs maximales positives et négatives du signal.

Le module électronique 2 est agencé pour provoquer l'ouverture du circuit de l'enroulement primaire 4 lorsqu'une branche descendante 21 du signal S franchit , à un instant td un seuil de tension u représenté par une ligne en tirets parallèle à l'axe des temps sur la figure 2.

Or, au signal S viennent se superposer des signaux parasites tels que 23 (figure 2) qui peuvent provoquer un franchissement du seuil de tension u dans le sens qui provoque, au niveau du module électronique 2, la commande de l'ouverture du circuit de l'enroulement primaire 4, et donc la production d'une étincelle d'allumage intempestive.

On a pu établir qu'un déplacement axial relatif des dents 9 du stator et des dents 11 du rotor, c'est-à-dire un déplacement sensiblement parallèle à l'axe A, dû en particulier aux tolérances de construction, aux jeux inhérents au capteur, et à des vibrations transmises par le moteur, peut provoquer des signaux parasites tels que 23.

Pour réduire ou éliminer de tels signaux dûs à des déplacements axiaux relatifs des dents 9 et 11, on prévoit des moyens C (figure 3) pour compenser les variations de l'entrefer 16 sensiblement circonférentiel entre les dents polaires 11 du rotor et les dents polaires 9 du stator en réponse à un déplacement relatif de ces dents suivant une direction sensiblement parallèle à l'axe A de rotation.

Généralement, le stator 8 présente un fond 24 plan comportant, à sa périphérie, les dents 9 sensiblement orthogonales au plan moyen du fond. Le stator 8 peut être réalisé à partir d'une pièce plate en acier dont les dents sont repliées sensiblement à 90°.

Le rotor 10 présente une forme semblable à celle du stator, et comporte un fond plan 25 ; les dents 11 sont situées à la périphérie de ce fond et sont sensiblement orthogonales à son plan moyen.

Le rotor 10 est situé du même côté du fond 24 du stator que les dents 9 de ce stator; la concavité du rotor 10 est orientée en sens inverse de celle du stator 8 et les dents 11 du rotor sont situées radialement vers l'intérieur par rapport à celles 9 du stator. Il est à noter que le fond 25 du rotor peut être constitué par des branches formant une sorte d'étoile et n'ayant une partie commune que dans leurs zones centrales fixées sur l'arbre 12.

Les moyens C pour compenser les variations de réluctance des entrefers tels que 16 sensiblement circonférentiels sont avantageusement constitués par la forme des dents 9 du stator et la forme des dents 11 du rotor comme représenté en développé sur la figure 3.

Ces formes sont choisies de telle sorte que les surfaces de ces dents qui interviennent pour la détermination d'un entrefer 16 orienté sensiblement circonférentiellement diminuent lorsque la dimension de cet entrefer diminue par suite d'un déplacement axial relatif des dents 9 et 11 considérées du stator et du rotor, et, qu'inversement, lesdites surfaces augmentent lorsque l'entrefer augmente par suite d'un tel déplacement axial.

Plus précisément, selon la représentation en développé de la figure 3, les dents 9 du stator restent immobiles, tandis que les dents 11 du rotor se déplacent en translation, dans le plan de la figure, par exemple de la gauche vers la droite suivant le sens de la flèche M. Les dents 11 se trouvent dans un plan différent de celui des dents 9 du stator. Il est clair que lors de la rotation du rotor, les dents 11, dans leur représentation en développé, passent derrière les dents 9. L'axe de rotation du rotor 10 est situé en dehors du plan de la figure 3, par exemple en arrière de ce plan et est orthogonal à la direction M du mouvement.

Le rotor 8 et le stator 10 ont été représentés en trait plein sur la figure 3 à un instant donné, pour une position angulaire relative dans laquelle les dents 11 du rotor sont décalées par rapport aux dents 9 du stator d'un angle $\alpha$, représenté sur la figure 4 qui correspond à une coupe horizontale des dents 9 et 11 du stator et du rotor dans une position correspondant sensiblement à celle de la vue en développé de la figure 3.

Dans une telle position, le flux magnétique passe des dents 9 aux dents 11, ou inversement, par l'entrefer sensiblement circonférentiel 16 déterminé par les bords de chant ou bords d'attaque 17 et 18 évoqués précédemment.Les surfaces des dents 9 et 11 qui interviennent pour la détermination de cet entrefer 16 sont donc égales au produit de la longueur l (figure 3), des parties en regard des bords 17 et 18, par l'épaisseur radiale telle que h (figure 4) des dents 9 et 11. on suppose, pour simplifier, que cette épaisseur h est la même pour les dents 9 et 11. L'épaisseur h étant constante, les surfaces des dents 9 et 11 qui interviennent pour la détermination de l'entrefer 16 sont donc proportionnelles à la longueur l et varient avec cette longueur.

La dimension de l'entrefer 16 qui correspond à la distance entre les bords 17 et 18 a été désignée par e sur la figure 3.

La réluctance de l'entrefer 16, ou en quelque sorte la résistance au passage du flux magnétique opposée par cet entrefer,augmente lorsque la distance e augmente, et inversement ; cette réluctance par contre, pour une distance e constante, dimi-

nue lorsque la distant I augmente.

A un instant donné, par exemple pour l'instant correspondant à la position angulaire relative du stator et du rotor représentée sur les figures 3 et 4, un déplacement des dents 11 considéré du rotor 10, par rapport aux dents 9 du stator peut se produire suivant une direction, représentée par la double flèche Δ sur la figure 3, sensiblement parallèle à l'axe de rotation A de la figure 1.

Sur la partie gauche de la figure 3, on a représenté en trait mixte une position que peut prendre une dent 11 du rotor du fait d'un tel déplacement ; cette position correspond à un éloignement, suivant la direction axiale, du rotor 10 par rapport au stator 8. La longeur I des parties en regard des dents 9 et 11, intervenant pour la détermination de l'entrefer 16 va diminuer. Si aucune disposition particulière n'était prise, une telle diminution de la longueur I provoquerait une augmentation de la réluctance de l'entrefer 16 et donc une variation du flux magnétique pouvant engendrer, aux bornes de la bobine 19, un signal parasite tel que 23 (figure 2).

Grâce à la forme des dents 9 et 11 prévue par l'invention, lors d'une telle diminution de la longueur I (correspondant, sur la gauche de la figure 3, au passage de la dent 11 de sa position en trait plein à la position en trait mixte) la dimension e de l'entrefer 16 diminue, par suite du déplacement axial relatif, et compense, au moins partiellement,les variations de la longueur I.

Si le déplacement de la dent 11, suivant la direction Δ ,s'effectue dans le sens inverse, comme illustré sur la partie droite de la figure 3 par une position représentée en tirets, la dimension e de l'entrefer augmente ; la variation de réluctance magnétique, qui normalement devrait en résulter, est compensée, au moins en partie, par l'augmentation de la longueur I des parties en regard des bords 17 et 18.

De préférence, la forme des dents 11 et 9 est choisie de telle sorte que ces dents présentent un bord d'attaque 18, 17, incliné respectivement d'un angle a pour le rotor 10 et d'un angle b pour le stator 8 par rapport à la direction de l'axe de rotation A. De préférence, les angles a et b sont égaux en valeur absolue. Dans ces conditions, comme visible d'après la figure 3, la distance e entre les bords d'attaque diminue, pour une position angulaire donnée du rotor à un instant donné, lorsque la distance axiale k entre le plan moyen du fond du rotor 10 et le plan moyen du fond du stator 8 augmente, et inversement la distance e augmente lorsque la distance k diminue.

Les angles a et b sont déterminés afin d'entretenir des performances magnétiques constantes, quelle que soit l'évolution de k. Avantageusement, on choisit les angles a et b de telle sorte que le rapport I/e reste sensiblement constant.

Généralement, les bords 26 et 27 des dents 11 et 9, opposés aux bords d'attaque 17 et 18 sont symétriques de ces bords d'attaque par rapport à une direction parallèle à celle de l'axe de rotation de telle sorte que le capteur 1 puisse fonctionner indifféremment pour un sens de rotation ou pour le sens de rotation opposé avec les mêmes performances.

Le contour en élévation des dents 9 et 11, comme visible sur la figure 3, a la forme d'une trapèze dont la petite base est attenante au fond du stator ou du rotor, tandis que la grande base est éloignée de ce fond. Le trapèze est de préférence un trapèze isocèle.

La fonctionnement du capteur 1 conforme à l'invention résulte immédiatement des explications précédentes.

La rotation du rotor 10 par rapport au stator 8 provoque, aux bornes de la bobine 19 des signaux ayant l'allure de ceux de la figure 2, pour la commande de l'allumage. Toutefois, grâce aux dispositions de l'invention, et aux formes adoptées pour les dents 9 et 11, les signaux parasites tels que ceux illustrés en 23 sur la figure 2, sont réduits ou supprimes. Il en résulte une diminution ou même une suppression des allumages intempestifs et un meilleur fonctionnement du dispositif d'allumage et du moteur à combustion interne.

Ces résultats sont obtenus d'une manière économique, sans modification sensible de l'encombrement et du prix du capteur.

**Revendications**

1. Capteur inductif pour l'émission d'un signal destiné à déclencher un dispositif d'allumage pour moteur à combustion interne, comprenant un stator (8) comportant des dents polaires (9) réparties à sa périphérie et un rotor (10) concentrique au stator comportant également des dents polaires (11) propres à défiler en regard de celles du stator lorsque le rotor est entraîné en rotation, le rotor et le stator appartenant à un circuit magnétique comprenant un aimant (14) et ayant des lignes de flux magnétique (f) qui passent par les dents polaires du stator (9) et du rotor (11), et par un entrefer situé entre ces dents, le capteur inductif comprenant en outre une bobine (19) propre à être traversée par le flux magnétique du circuit, flux dont les variations provoquées par la rotation du rotor (10) engendrent, par induction, des signaux (S) aux bornes de la bobine (19), ledit capteur comportant des moyens (C) pour permettre à la réluctance d'entrefer de rester sensiblement constante en réponse à un déplacement axial relatif des dents (9,11) du stator et du rotor, caractérisé par le fait que les susdits moyens (C) sont constitués par la forme des dents (11) du rotor et la forme des dents (9) du stator, ces formes étant choisies de telle sorte que la dimension (e) de l'entrefer circonférentiel, dimension égale à la distance séparant circonférentiellement une dent du stator et la dent correspondante du rotor, augmente lorsque les sections de passage offertes au flux magnétique dans l'entrefer augmentent par suite d'un déplacement axial relatif des dents (9, 11) du stator et du rotor, et, qu'inversement cette dimension (e) de l'entrefer diminue lorsque lesdites sections de passage diminuent par suite d'un tel déplacement axial, de sorte que la réluctance d'entrefer circonférentiel reste sensiblement constante en réponse au déplacement axial.

2. Capteur selon la revendication 1 dans lequel le stator (8) présente un fond (24) sensiblement plan comportant, à sa périphérie, des dents (9) sensiblement orthogonales au plan moyen du fond, tandis que le rotor (10) présente une forme semblable à celle du stator, mais avec sa concavité orientée en sens inverse, le rotor (10) étant situé du même côté du fond (24) du stator que les dents (9) dudit stator, de sorte que les dents (11) du rotor défilent au voisinage de celles du stator, en étant généralement situées vers l'intérieur par rapport ux dents du stator, caractérisé par le fait que la forme des dents (11, 9) du rotor et du stator est choisie de telle sorte que ces dents présentent un bord d'attaque (18, 17) incliné d'un angle (a) pour le rotor et d'un angle (b) pour le stator par rapport à la direction de l'axe de rotation (A) afin que la distance (e) entre les bords d'attaque, définissant l'espace d'entrefer circonférentiel (16), considérée pour une position angulaire donnée du rotor (10), diminue lorsque la distance axiale (k) entre le plan moyen du fond (25) du rotor et le plan moyen du fond (24) du stator augmente, et qu'inversement, la susdite distance (e) entre les bords d'attaque augmente, lorsque la distance (k) entre les plans moyens des fonds du rotor et du stator diminue.

3. Capteur selon la revendication 2, caractérisé par le fait que les angles (a) et (b) sont égaux en valeur absolue.

4. Capteur selon la revendication 2 ou 3, caractérisé par le fait que la valeur des angles (a) et (b) est choisie de telle sorte que, pour une position angulaire donnée du rotor (10) par rapport au stator, le rapport de la longueur (l) des bords d'attaque en regard, déterminant un espace d'entrefer (16) sensiblement circonférentiel, à la distance (e) entre ces bords d'attaque reste sensiblement constant si la distance axiale relative entre les dents considérées du stator et du rotor varie.

5. Capteur selon l'une quelconque des revendications 2 à 4, caractérisé par le fait que le contour en élévation des dents (11, 9) du rotor et du stator a la forme d'un trapèze dont la petite base est attenante au fond du rotor ou du stator, et dont la grande base est éloignée du fond.

6. Capteur selon la revendication 5, caractérisé par le fait que le trapèze est un trapèze isocèle.

7. Dispositif d'allumage pour moteur à combustion interne, à capteur inductif, caractérisé par le fait que ce capteur inductif est conforme à l'une quelconque des revendications 1 à 6.

## Claims

1. Inductive signal emitter sensor for triggering an ignition device for an internal combustion engine, comprising a stator (8) having polar teeth (9) distributed on its periphery and a rotor (10) concentric with the stator also comprising polar teeth (11) able to move in facing relationship to those of the stator when the rotor is set in rotation, the rotor and the stator belonging to a magnetic circuit comprising a magnet (14) and having magnetic flux lines (f) which pass through the polar teeth of the stator (9) and of the rotor (11) and through an air gap situated between these teeth, the inductive sensor also comprising a coil (19) through which the magnetic flux of the circuit is able to flow, a flux whereof the variations caused by the rotation of the rotor (10) produce, by induction, signals (S) at the terminals of the coil (19), said sensor comprising means (C) to enable the air gap reluctance to remain substantially constant in response to a relative axial movement of the teeth (9, 11) of the stator and of the rotor, characterised by the fact that the said means (C) are constituted by the shape of the teeth (11) of the rotor and the shape of the teeth (9) of the stator, these shapes being chosen so that the dimension (e) of the circumferential air gap, which dimension is equal to the distance circumferentially separating one tooth of the stator and the corresponding tooth of the rotor, increases when the sections of passage offered to the magnetic flux in the air gap increase as a result of a relative axial movement of the teeth (9, 11) of the stator and of the rotor, and, that conversely this dimension (e) of the air gap decreases when said sections of passage decrease as a result of such an axial movement, so that the circumferential air gap reluctance remains substantially constant in response to the axial movement.

2. Sensor according to claim 1, in which the stator (8) comprises a substantially flat base (24) comprising, on its periphery, teeth (9) which are substantially orthogonal to the central plane of the base, whereas the rotor (10) has a shape similar to that of the stator, but with its concavity oriented in the opposite direction, the rotor (10) being situated on the same side of the base (24) of the stator as the teeth (9) of said stator, so that the teeth (11) of the rotor pass in the vicinity of those of the stator, whilst being generally situated towards the inside with respect to the teeth of the stator, characterised by the fact that the shape of the teeth (11, 9) of the rotor and of the stator is chosen so that these teeth have a leading edge (18, 17) inclined by an angle (a) for the rotor and by an angle (b) for the stator with respect to the direction of the axis of rotation (A) in order that the distance (e) between the leading edges, defining the circumferential air gap space (16), considered for a given angular position of the rotor (10), decreases when the axial distance (k) between the central plane of the base (25) of the rotor and the central plane of the base (24) of the stator increases, and that conversely, the said distance (e) between the leading edges increases, when the distance (k) between the central planes of the bases of the rotor and of the stator decreases.

3. Sensor according to Claim 2, characterised by the fact that the angles (a) and (b) are equal in absolute value.

4. Sensor according to Claim 2 or 3, characterised by the fact that the value of the angles (a) and (b) is chosen so that, for a given angular position of the rotor (10) with respect to the stator, the ratio of the length (l) of the facing leading edges, determining a substantially circumferential air gap space (16), to the distance (e) between these leading edges remains substantially constant if the relative axial distance between the teeth in question of the stator and of the rotor varies.

5. Sensor according to one of Claims 2 to 4, characterised by the fact that the contour in elevation of the teeth (11, 9) of the rotor and of the stator is in the shape of a trapezium whereof the small base adjoins the base of the rotor or of the stator and whereof the large base is remote from the base.

6. Sensor according to Claim 5, characterised by the fact that the trapezium is an isosceles trapezium.

7. Ignition device for an internal combustion engine, comprising an inductive sensor, characterised by the fact that this inductive sensor is in accordance with any one of Claims 1 to 6.

**Patentansprüche**

1. Induktiver Signalgeber für die Zündanlage in einer internen Brennkraftmaschine, umfassend einen Stator (8) mit auf seinem Umfang verteilten polaren Zähnen (9) und einen zum Stator konzentrisch angeordneten Rotor (10), welcher ebenfalls polare Zähne (11) aufweist, die, wenn der Rotor in Drehung versetzt wird, gegenüber denjenigen des Stators vorbeilaufen, wobei der Rotor und der Stator einem Magnetkreis zugehörig sind, welcher einen Magnet (14) enthält und magnetische Feldlinien (f) aufweist, welche durch die polaren Zähne des Stators (9) und des Rotors (11) und durch einen zwischen diesen Zähnen bestehenden Luftspalt hindurchgehen, wobei der induktive Signalgeber außerdem eine Spule (19) umfaßt, durch welche der Magnetfluß des Kreises hindurchgeht, Fluß, dessen durch die Drehung des Rotors (10) hervorgerufene Änderungen durch Induktion Signale (S) an den Klemmen der Spule (19) erzeugen, wobei der genannte Signalgeber Mittel (C) umfaßt, damit die Luftspaltreluktanz einer relativen Axialverschiebung der Zähne (9,11) des Stators und des Rotors gegenüber im wesentlichen konstant bleiben kann, dadurch gekennzeichnet, daß die oben genannten Mittel (C) durch die Form der Zähne (11) des Rotors und die Form der Zähne (9) des Stators gebildet werden, wobei diese Formen so gewählt werden, daß das Maß (e) des Umfangs-Luftspalts, welches gleich dem Abstand ist, der umfangsmäßig einen Zahn des Stators und den entsprechenden Zahn des Rotors trennt, größer wird, wenn die dem Magnetfluß im Luftspalt zur Verfügung stehenden Durchgangsquerschnitte infolge einer relativen Axialverschiebung der Zähne (9, 11) des Stators und des Rotors größer werden, und daß umgekehrt dieses Maß (e) des Luftspalts kleiner wird, wenn die genannten Durchgangsquerschnitte infolge einer derartigen Axialverschiebung kleiner werden, sodaß die Umfangs-Luftspaltreluktanz gegenüber der Axialverschiebung im wesentlichen konstant bleibt.

2. Signalgeber gemäß Anspruch 1, bei welchem der Stator (8) eine im wesentlichen ebene Grundfläche (24) aufweist, die an ihrem Umfang Zähne (9) trägt, die im wesentlichen orthogonal zur Mittelebene der Grundfläche angeordnet sind, während der Rotor (10) eine ähnliche Form wie der Stator aufweist, aber mit in umgekehrter Richtung ausgerichteter Konkavität, wobei sich der Rotor (10) an derselben Seite der Grundfläche (24) des Stators befindet wie die Zähne (9) des genannten Stators, sodaß die Zähne (11) des Rotors in kurzer Entfernung von denjenigen des Stators vorbeilaufen, wobei sie i.a. in Bezug auf die Zähne des Stators nach innen liegen, dadurch gekennzeichnet, daß die Form der Zähne (9, 11) des Rotors und des Stators so gewählt wird, daß diese Zähne eine Anlegekante (18, 17) aufweisen, welche beim Rotor in einem Winkel (a) und beim Stator in einem Winkel (b) in Bezug auf die Richtung der Rotationsachse (A) geneigt ist, damit der Abstand (e) zwischen den Anlegekanten, der den Umfangs-Luftspalt (16) bestimmt, und der für eine gegebene Winkelstellung des Rotors (10) betrachtet wird, kleiner wird, wenn der Axialabstand (k) zwischen der Mittelebene der Grundfläche (25) des Rotors und der Mittelebene der Grundfläche (24) des Stators größer wird und umgekehrt der o.a. Abstand (e) zwischen den Anlegekanten größer wird, wenn der Abstand (k) zwischen den Mittelebenen der Grundflächen des Rotors und des Stators kleiner wird.

3. Signalgeber gemäß Anspruch 2, dadurch gekennzeichnet, daß die Winkel (a) und (b) gleich an absolutem Wert sind.

4. Signalgeber gemäß Anspruch 2 oder 3, dadurch gekennzeichnet, daß die Größe der Winkel (a) und (b) so gewählt wird, daß bei einer gegebenen Winkelstellung des Rotors (10) in Bezug auf den Stator das Verhältnis der Länge (l) der gegenüberliegenden Anlegekanten, welche einen Umfangs-Luftspalt (16) bestimmt, zum Abstand (e) zwischen diesen Anlegekanten im wesentlichen konstant bleibt, wenn der relative Axialabstand zwischen den betrachteten Zähnen des Stators und des Rotors variiert.

5. Signalgeber gemäß einem beliebigen der Ansprüche 2 bis 4, dadurch gekennzeichnet, daß der Umriß der Zähne (11, 9) des Rotors und des Stators im Aufriß die Form eines Trapezes aufweist, dessen kurze Grundlinie an die Grundfläche des Rotors oder des Stators angrenzt und dessen lange Grundlinie sich in einem Abstand von der Grundfläche befindet.

6. Signalgeber gemäß Anspruch 5, dadurch gekennzeichnet, daß das Trapez ein gleichschenkeliges Trapez ist.

7. Zündanlage für interne Brennkraftmaschine mit induktivem Signalgeber, dadurch gekennzeichnet, daß dieser induktive Signalgeber jedem beliebigen der Ansprüche 1 bis 6 entspricht.

FIG. 1

FIG. 2

**FIG. 3**

**FIG. 4**